Europäisches Patentamt

(19) European Patent Office

Office européen des brevets

(11) Publication number: **0 039 534**
**A2**

# (12) EUROPEAN PATENT APPLICATION

(21) Application number: **81200477.8**

(22) Date of filing: **04.05.81**

(51) Int. Cl.³: **A 24 C 1/04,** G 01 N 21/89,
G 06 F 15/20

(30) Priority: **02.05.80 NL 8002553**

(71) Applicant: **P.M.B. Patent Machinebouw B.V., No. 5,
Kanaaldijk, NL-5683 CR Best (NL)**

(43) Date of publication of application: **11.11.81**
**Bulletin 81/45**

(72) Inventor: **Krugers, Joost, No. 85, Zuiderklamp,
NL-5672 HB Nuenen (NL)**

(74) Representative: **Schumann, Bernard Herman Johan et
al, OCTROOIBUREAU ARNOLD & SIEDSMA
Sweelinckplein 1, NL-2517 GK The Hague (NL)**

(84) Designated Contracting States: **BE CH DE FR GB LI NL**

(54) Electronic auxiliary device for use with equipment for working sheet-like objects.

(57) The invention relates to an electronic auxiliary device to be coupled with a device for working sheet-like objects by means of at least one tool member, for example, for cutting cigar wrappers from tobacco leaves with the aid of at least one cutting member having a cutting form corresponding to the desired contour of a wrapper, said working device comprising:
1. a transport member for transporting each object from a stock station to a processing station and
2. means for positioning the or each tool member with respect to an object to be worked,
which in accordance with the invention is characterized by a detecting member which is arranged, connected and disposed with respect to the transport member in a manner such that it can feed electric signals corresponding to preselected properties of each object passing by to the positioning means.

X Sch/Se/P.M.B. 318

0039534

-1-

Short title: Electronic auxiliary device for use with
equipment for working sheet-like objects

The invention relates to an electronic auxiliary device to be coupled with an equipment for working sheet-like objects with the aid of at least one tool member, for example, for cutting wrappers from tobacco leaves for cigards with the aid of at least one cutting member having a cutting form corresponding with the desired circumferential shape of a wrapper, said working equipment comprising:

1. a transport member for transporting each object from a stock station to a working station and
2. means for positioning the or each tool member with respect to an object to be worked.

A working equipment of the kind set forth is known. The use thereof is not limited to cutting cigar wrappers from tobacco leaves mentioned above , but also applies to the treatment of textile, leather, wood, sheet iron, glass, paper, in general, in domains where it is desired to know the properties of contours and the surfaces defined thereby.

The invention has for its object to provide means by which the known working equipment can automatically operate with very great reliability and fiability.

-2-

0039534

A further object of the invention is to provide an electronic auxiliary device whose operation is, within wide limits, independent of the mean properties of the objects to be treated, for example, the degree of transparancy of the leaves to be worked.

Another object of the invention is to provide an auxiliary device for a tobacco-leaf working device comprising means by which ribs can be detected only in the presence ofa leaf in order to avoid incorrect interpretation of, for example, noise signals.

The invention has furthermore for its object to provide an auxiliary device whose operation is, within wide limits, independent of the transport speed of the objects to be worked.

For this purpose the electronic auxiliary device according to the invention comprises a detecting member which is arranged, connected and disposed with respect to the transport member in a manner such that it can apply to the positioning means electric signals corresponding to preselected properties of each object passing by. The detecting member may be of the optical type, in which passing  or incident light is used or of the acoustic type employing a sound source and a transducer adapted to scan the sound range concerned, for example, by using ultrasonic frequencies.

In the case in which said device serves to cut cigar wrappers from tobacco leaves the electronic auxiliary device according to the invention is characterized in a preferred embodiment by first, second and  third detection means for deriving electric signals from the said electric signals to correspond to

1. the contour line of  a leaf,
2. holes, if any, in the leaf and
3. ribs in the leaf.

In practice great advantages are obtained from that embodiment which is characterized in that

1. the transport member is a driven, transparent conveyor belt,

2. a source of light is arranged on one flat side of the conveyor belt,

3. the detecting member is disposed on the other flat side of the conveyor belt,

4. the detecting member is formed by a video-camera of the type scanning each time successively the same video line and providing a corresponding video signal and

5. the direction of the video line (termed hereinafter the x-direction) is at least substantially at right angles to the belt transport direction (termed hereinafter the y-direction).

In an important variant thereof the auxiliary device according to the invention is characterized in that the first and the second detecting means comprise a common comparator, one input of which is coupled with the output of the detecting member and the other input is connected with a threshold signal source, which may be adjustable, so that a transition between the two potential signal values of the bivalent output signal of the comparator is representative of a detected contour line or of the edge of a hole. Preferably, the second detection means are released after the first detection means have detected a contour line on account of a first transistion in the value of the comparator output signal after the beginning of the scan of a video line. A further development thereof resided in a variant which is characterized by

1. a positive peak detector and a negative peak detector the respective inputs of which are coupled with the output of the detecting member, said detectors being coupled for mutual settings so that at a temporary steady value of the output signal of one of the detectors due to the passing of an extreme value of the input signal in one of the detectors the other detector is released,

2. a subtraction circuit connected to the outputs of the two detectors, the output signal of said circuit corresponding to the absolute difference between the two detector output signals,

3. a gate signal source, which may be adjustable, the output signal of which is representative of signal value difference corresponding to the presence of a rib,

4. a comparator, the two inputs of which are connected to the outputs of the subtraction circuit and the gate signal source respectively,

5. a switch for passing or blocking respectively of the output signal of the comparator in dependence on the output signal of the comparator in a selective manner.

6. a first sign assessing circuit, the signal input of which is connected to the output of the switch and the output signal of which is representative of the sign of the first derivative of the input signal and

7. a second sign assessing circuit, the signal input of which is connected to the output of the comparator and the output signal of which is representative of the sign of the first derivative of the input signal,

the arrangement being such that the output signal of the first sign assessing circuit is representative of the presence of a rib and the output signal of the second sign assessing circuit is representative of the presence of a hole or a contour line. The auxiliary device according to the invention may, moreover, be characterized by

1. a clock generator for controlling the detecting member,

2. a first locking unit connected to the first sign assessing circuit and to the clock generator,

3. a second locking unit connected to the second sign assessing circuit and

4. a position reference signal source co-operating with the transport member for fixing the position of a leaf on the transport member,

the arrangement being such, that the first locking unit can carry all information relating to ribs in a leaf and the second locking device can carry all information relating to holes in and the contour line of a leaf.

There may be provided an arithmetic unit connected to the respective outputs of the locking units, to the outputs of a line-end detection unit and of a position reference signal source, to the reference signal source for the adjustment of the former, to a gat signal source for the adjustment and having an output for connection to the positioning means.

There is preferably provided a detector coupled with the conveyor belt and producing at equal intervals an output signal which is fed as a control-signal to a switch included in the block line between the clock generator and the detecting member in a manner such that even in the case of variations in the conveyor belt speed the successive scan of the video line is carried out at equal intervals.

The auxiliary device according to the invention may be provided with scan control-means adapted to successively scantwice each video line with a constant, preselected recurrence period, whilst only the signals produced at everey second scan are passed on for further processing.

The abovementioned threshold signal source may be adjustable, the adjustment taking place in accordance with the measurement of the highest and the lowest signal value at the scan of a few video lines of a first leaf from a sequence of leaves of similar type. The gate signal source may also be adjustable, the adjustment taking place by measuring the number of ribs detected at an initial adjustment and by trimming the adjustment so that the number of detected ribs is equal to a preselected number, for example, ten.

A refined variant is that which is characterized by correlation means for comparing with one another groups of adjacent video lines and for the formation of signals on the basis thereof which provide information about potential contour lines, ribs and holes covering at least preselected distances.

The invention will be explained more fully with reference to the accompanying drawings, . Herein show

Figure 1 a block diagram of one embodiment of an auxiliary device in accordance with the invention,

Figure 2 a schematic example of a video signal corresponding to one video line and given off by a video camera at the passage of a tobacco leaf,

Figure 3 a detail of the graph of figure 2, illustrating moreover the operation of the peak detectors of figure 1.

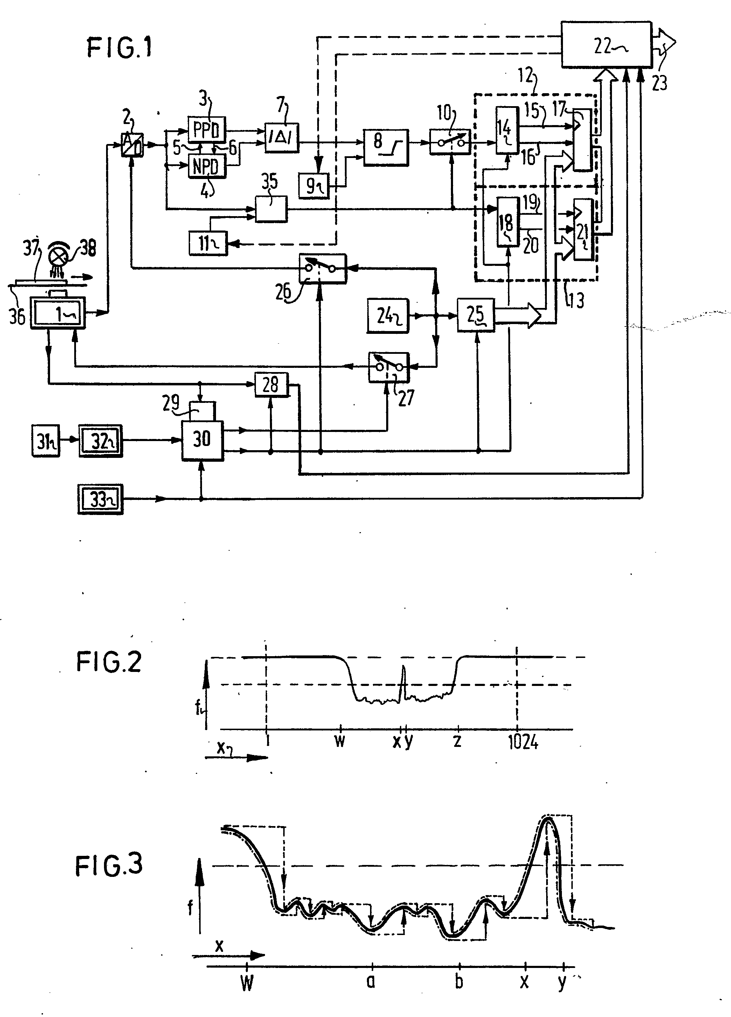

Fig.1 is a block diagram of one embodiment of the auxiliary device according to the invention. A video camera 1 is adapted to generate video signals corresponding to the light passing through tobacco leaves. These signals are applied to an analogue-digital converter 2, which is connected to a positive peak detector or PPD3, a negative peak detector or NPD4 and a comparator 35. The PPD and NPD4 are coupled for mutual adjustment by adjusting lines 5, 6 in a manner such that when the output signal of one of the detectors temporarily remains steady resulting from the passage of an extreme value of the input signal, the other detector is released. The output signal of the PPD3 and that of the NPD4 is applied to a subtraction circuit 7 adapted to assess the absolute value of the difference between the two input signals. The output signal of the circuit 7 is applied to a comparator 8, the other input of which is connected to a gate signal source 9, which provides a signal whose value is representative of a signal value difference corresponding to the presence of a potential rib. The output signal of the comparator 8 is fed to a switch 10, which is open in the case of "no leaf". This switch 10 is controlled from the comparator 35, which serves to detect :: "leaf/no leaf", one input of said comparator being connected to the analogue/digital converter 2 and the other input to a threshold signal source 11, which serves to adjust the threshold level indicated in fig.2 by the horizontal, broken line, the arrangement being such that a transition between the two potential signal values of the bivalent output signal of the comparator 35 is representative of a detected contour line or the edge of a hole.

From the A/D converter 2 the signal processing is digital. For the sake of clarity, however, the signal is described as being analogue in some passages of this description.

On the right-hand side of the block diagram two blocks are outlined and designated 12 and 13 respectively. which will be described in further detail hereinafter. The block 12 corresponds to the detection of ribs. The block 13 corresponds to the detection of holes and contours.

The output signal of the switch 10 is applied to a first sign assessing circuit 14, which is connected through a clock line 15 and a signal line 16 to a first locking unit 17. The line 16 passes a signal corresponding to the sign of the derivative of the video output signal of the video camera 1 (sign $\frac{df}{dx}$).

The output of the comparator 35 is connected to a second sign assessing circuit 18, which is connecfed through a clock line 19 and a signal line 20 to a second locking unit 21. The line 20 transmits a signal corresponding to the sign of the derivative of the video signal. The outputs of the locking units 17 and 21 are connected to an arithmetic unit 22, which serves, as is indicated by broken lines, inter alia for adjusting the gate signal source 9 and the threshold signal source 11 and furthermore for controlling the means (not shown) for positioning a cutting tool elements forming part of the device for working the sheet-like objects. For this purpose the arithmetic unit 22 is furthermore provided with a multiple output connection 23.

The auxiliary device shown in fig.1 comprises furthermore a clock generator 24 connected to a Pixel counter 25 (Pixel = picture - element), the output signals of which are applied to the locking units 17 and 21. The generator 24 is furthermore connected to a controllable switch 26, which serves to start the analogue/digital converter 2 and to a controllable switch 27 for starting the video camera 1.

A second output of the camera 1 is connected to a circuit 28 for detecting the end of the line, the output signal of said circuit being applied to the arithmetic unit 22 and to a 2-divider 29, which is coupled with a logical encoder 30, one output of which is connected to the switch 27 for controlling the same and the other output of which is connected to the line-end detection circuit 28, the switch 26, the Pixel counter 25 and the sign assessing circuits 14 and 18. In this way the Pixel counter 25 can be reset to zero, whilst otherwise the rib and contour logics canbe released.

There is furthermore provided a y-co-ordinate detector 31, which provides a pulse every 0.7 mm(the x-direction corresponds to the scanning direction; the y-direction to the belt transport direction). The output signal of the detector 31 is applied to an encoder 32, the output of which is connected to the encoder 30. There is furthermore provided a position reference signal source 33 (constructed in the form of a photo-electric cell co-operating with a picture point on a conveyor belt 36), which serves to supply a position reference signal in order to relate the position of a leaf during the scan accurately to the position of the leaf during cutting. The output of said unit 33 is connected to the encoder 30 and the arithmetic unit 22.

The video camera 1 is a known type, for example, a Reticon LC 300 U 1024. This camera has a line array of 1024 diodes and is stationarily disposed beneath the transparent conveyor belt 36. Above this belt 36 is arranged a light source 38, which projects light across the belt onto the photo-diodes of the camera 1. Without discussing further details of this known camera it is noted that the charge of these diodes is a measure for the amount of incident light. With the aid of a clock signal from the clock generator 24 the diodes are scanned one by one. The resultant video output signal of the camera 1 is fed for further processing to the analogue/digital converter 2.

When a tobacco leaf 37 is positioned on the conveyor belt, the charges of the various photo-diodes will not be equal to one another, they will rather show the image shown in fig.2. In this figure the ordinal number of the respective diodes from 1 to 1024 corresponding to the x-position is plotted horizontally, that is to say, transversely of the transport direction, whereas the light level designated by $f$ is plotted vertically. The lower horizontal line corresponds to the black level and the upper horizontal line to the white level.

From fig.2 it is apparent that the light level does not completely attain the black level due to the remaining transparency of tobacco leaves.

At the diode $w$ the beginning of a leaf is stated that is to say, a point of the contour line thereof. Between the diodes $w$ and $x$ a leaf is present and the charge level at the intermediate diodes is, therefore, lower than in the part 1-w. Between the diodes $x$ and $y$ substantially all light is allowed to pass, which is indicative of the presence of a hole in the leaf. At y-z a similar image is seen as between $w$ and $x$. $z$ is the end of the leaf. Between z-1024 no leaf is present and the diode 1024 corresponds to the other edge of the conveyor belt.

As a matter of course, only in the presence of a leaf ribs are allowed to be detected, that is to say, between $w$ and $z$ . The switch 10 used for this purpose is discussed earlier with reference to fig.1.

Fig.3 shows the part of the graph of fig.2 $f$ between the diodes $w$ and $y$ on an enlarged scale. In the proximity of the diodes $a$ and $b$ ribs are present which have to be detected by the auxiliary device according to the invention. Since the ribs have to be detectable both in a thick and in a thin leaf(corresponding to the passage of a comparatively small and a high amount of light respectively) the difference circuit 3,4,5,6,7 described above is employed. This circuit operates as follows.

When the light level passes from white towards black ($f' = \frac{df}{dx} < 0$ ) the NPD4 follows this level and the PPD3 remains at a constant value. When on the contrary the light level passes from black to white ($f' = \frac{df}{dx} > 0$) the PPD3 follows this level and the NPD4 remains at a constant value. The NPD4 is drawn upwards to the level of PPD3 via the set line 6, when the light level attains a local maximum (consequently, when $f' = 0$ and $f'' < 0$). The PPD3 is drawn downwards to the level of the NPD4 via the set line 5, when the light level attains a local minimum ($f' = 0$ and $f'' > 0$).

In order to assess whether a local minimum has to be or not to be recognized a s a rib, the gate signal source 9 is provided, which in conjunction with the comparator 8 carries out a comparison between the gate value and the difference between the output signals of the PPD3 and NPD4. If the absolute value of this difference exceeds the gate value, an interruption signal is generated, which corresonds with one of the two potential values of the bivalent output signal of the comparator 8. In fig.3 a potential gate value is indicated by a vertical line intersecting the curve and at each end a horizontal end dash. Since at a transgression of the gate value this interruption signal isgenerated both at positive and negative flanks, it has to be assessed at which flank the interruption signal is generated, since a rib invariably starts with a negative flank and terminates wtih a positive flank. For one rib both flanks should be detected. By using the difference principle described above there is no need for separately adjusting the arrangement for dark or light tobacco leaves. Since it has to be known where the leaf has ribs, the value of the gate in the present embodiment is adaptively adjustable by the arithmetic unit 22 so that small differences between the output signals of the PPD3 and NPD4 and noise are not interpreted as being indicative of ribs.

Since ribs should solely be detected in the presence of a leaf, the circuitry should only generate a signal in the presence of a leaf. Since the light level difference between the presence and absence of a leaf is much higher than in the case of ribs, both with dark and light tobacco leaves, a simple threshold detector 3511 is used, which has an adjustable threshold value. This threshold value corresponds to the horizontal, broken line of figures 2 and 3.

In the absence of a leaf the light level has a value exceeding said threshold and the rib detection circuitry 14, 15, 16, 17 is bloced by the corresponding control of the switch 10. If the light level drops below the threshold concerned, a leaf is detected and the rib detection is released.

From the foregoing it will be apparent that the presence of ribs and holes in the tobacco leaf can be detected. It is furthermore of essential importance to know where the ribs and holes are located in the leaf.

The camera 1 comprises 1024 (=$2^{10}$) photo-diodes. Therefore, the electronic device comprises a counter 25 (pixel counter) running with the diode numerals in the camera 1 and counting from 1 to 1024. At the beginning of a video line both the camera diodes and the pixel counter 25 are reset to zero. Subsequently, both are fed by the same clock frequency from the clock generator 24.

At a change-over from "no leaf" to "leaf" the threshold detector 35, 11 generates an interruption signal. This interrpuption signal introduces the value found in the pixel counter 25 at the instant concerned into the locking unit 21. This also applies to a change-over from "leaf" to "no leaf" so that as from said instant it is known where the leaf is located on the conveyor belt.

The interruption signals generated by the rib detection circuitry 3,4,7,8,9,10,14 introduce also the pixel counting result into a locking circuit 17 so that the position of the ribs in the leaf on the belt is also known.

0039534

In a given embodiment the speed of the conveyor belt 36 is 0.11 m/sec. Since in this case the pixel magnitude is formed by a square of 0.7 x 0.7 square mm., the available line scanning is about 6.5 ms/sec. Consequently, for each diode the maximum smapling time is 6.3 /usec and therefore, the minimum value of the clock frequency should be 157 kHz. If this frequency has to be continously fed to the camera and the speed of the conveyor belt cannot vary, the scanning lines are successively formed with an interval of 0.7.

In practice, however, the speed of the belt is variable so that errors in the amplification of the video signal would occur, which would give rise to adjustment differences in the threshold signal source 11 and the gate signal source 9, since the video output signal of a diode is determined by the produced of light intensity and the recurring scan period controlled by the encoder 32.

In the present embodiment the recurring scan period is decoupled and hence independent of the belt speed. Therefore, the y-co-ordinate detector 31 invariably starts a scan cycle consisting of a first scan followed by a second scan a fixed time after the beginning of the former. The first scan serves to reset the diodes and does not contribute to the video information. The second scan is the measuring scan proper and serves to produce the video information.

It will be obvious that by means of the constant, preselected time interval between the start of the "idle " scan and the measuring scan the problems described involved in variations in belt speed are fully solved.

When a line is scanned, the block to the camera is bloced until the start of the next-following scanning line. Blocking of the clock takes place because the camera has no start information. Therefore, it is necessary to wait for diode 1024 before the scanning line can be stopped, since otherwise the next scanning line will not start at diode 1.

-1-

CLAIMS

1. An electronic auxiliary device to be coupled with a device for working sheet-like objects by means of at least one tool member, for example, for cutting cigar wrappers from tobacco leaves with the aid of at least one cutting member having a cutting form corresponding to the desired contour of a wrapper, said working device comprising:

1. a transport member for transporting each object from a stock station to a processing station and

2. means for positioning the or each tool member with respect to an object to be worked, characterized by a detecting member which is arranged, connected and disposed with respect to the transport member in a manner such that it can feed electric signals corresponding to preselected properties of each object passing by to the positioning means.

2. An auxiliary device as claimed in claim 1 in which said device serves for cutting cigar wrappers from tobacco leaves characterized by first, second and third detection means for deriving from said electric signals electric signals which correspond to the following, respective properties:

1. the contour line of a leaf,

2. holes, if any, in the leaf and

3. ribs in the leaf.

3. An auxiliary device as claimed in claim 2 characterized in that

1. the transport member is a driven, transparent conveyor belt,

2. a light source is arranged on one side of the conveyor belt,

3. a detecting member is arranged on the other flat side of the conveyor belt,

4. the detecting member is constructed in the form of a video camera of the type successively scanning the same video line and producing a corresponding video signal and

5. the direction of the video line is at least substantially at right angles to the direction of movement of the belt.

4. An auxiliary device as claimed in claim 2 or 3 characterized in that the first and second detection means comprise a common comparator (5), one input of which is coupled with the output of the detecting member (1) and the other input with a threshold signal source (11), which may be adjustable, the arrangement being such that a transition between the two potential signal values of the bivalent output signal of the comparator (5) is representative of a detected contour line or the edge of a hole.

5. An auxiliary device as claimed in claim 4 characterized in that the second detection means are released after the first detection means have detected a contour line in accordance with a first transition in the value of the comparator output signal after the beginning of the scanning of a video line.

6. An auxiliary device as claimed in anyone of claims 2 to 5 characterized by

1. a positive peak detector (3) and a negative peak detector (4), whose respective inputs are coupled with the output of the detecting member (1), said detectors being coupled for mutual adjustment in a manner such that when the output signal of one of the detectors remains temporarily stationary due to passing of an extreme value of the input signal, the other detector is released,

2. a subtraction circuit connected to the outputs of the two detectors, the output signal of said circuit corresponding to the absolute difference between the two detector output signals,

3. a gate signal source (9), which may be adjustable, the output signal of which is representative of a signal value difference corresponding to the presence of a rib,

4. a comparator (8), the two inputs of which are connected to the outputs of the subtraction circuit(7) and the gate signal source (9) respectively,

5. a switch (10) for selectively passing or blocking the output signal of the comparator (8) in dependence o the output signal of the comparator (5),

6. a first sign assessing circuit (14), the signal input of which is connected to the output of the switch (10) and the output signal of which is representative for the sign of the first derivate of the input signal and

7. a second sign assessing circuit (18), the signal input of which is connected to the output of the comparator (5) and the output signal of which is representative of the sign of the first derivative of the input signal, the arrangement being such that the output signal of the first sign assessing circuit (14) is representative of the presence of a rib and the output signal of the second sign assessing circuit (18) is representative of the presence of a hole or a contour line.

7. An auxiliary device as claimed in claim 6, characterized by

1. a clock generator (24) for controlling the detecting member (1),

2. a first locking unit (17) connected to the first sign assessing circuit (14) and the clock generator (24),

3. a second locking unit (21) connected to the second sign assessing circuit (18) and

4. a position reference signal source (33) co-operating with the transport member for fixing the position of a leaf on the transport member,

the arrangement being such that the first locking unit (17) can carry all information relating to ribs in a leaf and the second locking unit (21) can carry all information relating to holes in and the contour lines of a leaf.

8. An auxiliary device as claimed in claim 7, characterized by an arithmetic unit (22) which is connected to the respective outputs of the locking units (17,21), to the outputs of a line-end detection unit (28) and of a position reference signal source (33), to the reference signal source (11) for adjusting the same, to the gate signal source (9) for adjusting the same and which has an output (23) for connection to the positioning means.

9. An auxiliary device as claimed in anyone of claims 3 to 8 characterized by a detector (31) coupled with the conveyor belt (36) and producing an output signal at equal intervals, which is fed as a control-signal to a switch (27) included in the clock line between the clock generator (24) and the detecting member (1), the arrangement being such that even in the case of variation in the conveyor belt speed the successive scan of the video line takes place at equal distances.

10. An auxiliary device as claimed in anyone of claims 3 to 9 characterized by scanning control-means (29,30) adapted to successively scan twice each video line in constant, preselectedrrecurring periods, only the signals produced at every second scan being passed on for further processing.

11. An auxiliary device as claimed in anyone of claims 4 to 10 characterized in that the threshold signal source (11) is adjustable and  in that the adjustment is carried out on account of measurement of the highest and lowest signal values at the scan of a few video lines of a first leaf of a sequence of leaves of similar type.

12. An auxiliary device as claimed in claim 6 characterized in that the gate signal source is adjustable and in that the adjustment is carried out by measuring the number of ribs detected at an initial adjustment, the adjustment being trimmed so that the number of detected ribs is equal to a preselected number, for example, ten.

13. An auxiliary device as claimed in anyone of the preceding claims characterized by correlation means for comparing groups of adjacent video lines with one another and for producing signals on the basis thereof which carry information about potential contour lines, ribs and holes covering at least preselected distances.

----------

0039534

FIG.1

FIG.2

FIG.3